## Europäisches Patentamt
## European Patent Office
## Office européen des brevets

(11) Veröffentlichungsnummer: **0 274 026**
**A1**

# (12) EUROPÄISCHE PATENTANMELDUNG

(21) Anmeldenummer: **87116874.6**

(22) Anmeldetag: **16.11.87**

(51) Int. Cl.⁴: **A01F 15/08 , B65B 11/04**

(30) Priorität: **12.12.86 DE 3642513**

(43) Veröffentlichungstag der Anmeldung:
**13.07.88 Patentblatt 88/28**

(84) Benannte Vertragsstaaten:
**AT BE CH DE FR GB LI NL SE**

(71) Anmelder: **Schenke, Helmut**
**Flurstrasse 24**
**D-8561 Happurg(DE)**

Anmelder: **Greissinger, Erwin**
**Heinz-Neidhardt-Ring 22**
**D-8564 Velden(DE)**

(72) Erfinder: **Schenke, Helmut**
**Flurstrasse 24**
**D-8561 Happurg(DE)**
Erfinder: **Greissinger, Erwin**
**Heinz-Neidhardt-Ring 22**
**D-8564 Velden(DE)**

(74) Vertreter: **Trapp, Günther**
**Im Herrenholz 3**
**D-8520 Erlangen-Buckenhof(DE)**

(54) **Vorrichtung zum Umwickeln von Grossballen.**

(57) Die Erfindung betrifft eine Vorrichtung zum Umwickeln von Großballen (3) mit einer Stretchfolie (4).

Der aus Grünfutter, Heu oder Stroh bestehende Großballen soll einfach und ohne Beschädigung dicht eingewickelt werden.

Hierzu ist ein an einen Traktor (1) anbaubares Gestell (2) mit einer Gabel (9) zum Anheben des Großballens (3) vorhanden. Die Gabel (9) weist zwei Rollen (10, 11) auf, die den Großballen (3) beim Umwickeln um seine Längsachse drehen. Das Umwickeln erfolgt mittels eines um eine vertikale Achse (6) drehbaren Wickelarms (7), der an seinem freien Ende eine Folienrolle (8) trägt.

Fig.1

EP 0 274 026 A1

## Vorrichtung zum Umwickeln von Großballen

Die Erfindung betrifft eine Vorrichtung zum Umwickeln von Großballen, insbesondere Grünfutter-, Stroh-oder Heuballen, mit einer Folie, welche mit einem Traktor zur Drehung des Großballens während des Wickelvorganges verbindbar ist.

Durch die E-A 0110110 ist eine Vorrichtung dieser Art bekannt, die als Anhänger für den Traktor ausgebildet und mit einer Auflage für den jeweiligen Großballen versehen ist. Ein Großballen muß also zum Umwickeln auf den Anhänger gehoben werden, so daß ein Auf-und Abladen erforderlich ist.

Der Erfindung liegt die Aufgabe zu Grunde, eine Vorrichtung der eingangs genannten Art zu vereinfachen, wobei der jeweilige Großballen beim Umwickeln so gehalten wird, daß Beschädigungen vermieden werden.

Diese Aufgabe ist erfindungsgemäß gelöst durch ein an den Traktor anbaubares Gestell mit einer Gabel zum Anheben des Großballens, die an ihren den Großballen tragenden Schenkeln zwei Rollen aufweist, auf denen der Großballen aufliegt und von denen mindestens eine zum Drehen des Großballens um seine Längsachse vom Traktor antreibbar ist und mit einem um eine vertikale Achse drehbaren Wickelarm über der Gabel, der an seinem Ende eine Folienrolle trägt. Bei der erfindungsgemäßen Vorrichtung wird der Großballen zu seiner Umwicklung mit Hilfe der Gabel etwas angehoben, so daß er vom Boden frei kommt und durch harte Stengel oder Steine auf den Boden nicht beschädigt wird.

Die Erfindung ist nachfolgend anhand eines in der Zeichnung dargestellten Ausführungsbeispieles näher erläutert. Es zeigen:

Fig. 1 eine an einem Traktor angebaute Vorrichtung nach der Erfindung;

Fig. 2 eine Ansicht der Vorrichtung gemäß Fig. 1 von vorne.

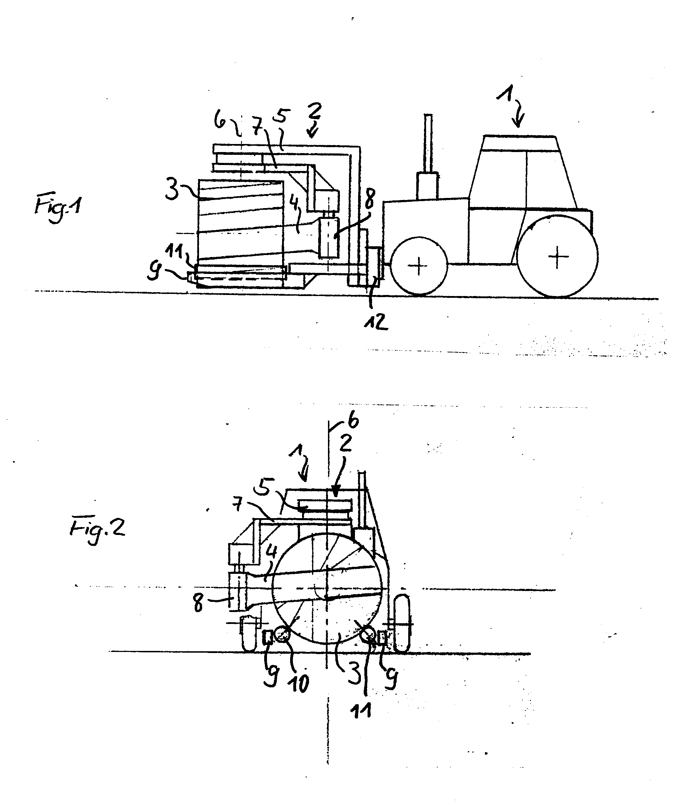

In der Fig. 1 ist ein Traktor 1 dargestellt, an dem vorne eine Vorrichtung 2 zum Umwickeln von Großballen 3 mit einer Stretchfolie 4 angebaut ist. Die Vorrichtung 2 weist ein unten offenes, den Großballen 3 übergreifendes Gestell 5 auf. Das Gestell 5 trägt einen um eine vertikale Achse 6 drehbaren Wickelarm 7, an dessen Ende eine Folienrolle 8 drehbar gelagert ist, von der die Folie 4 abgezogen wird. Zum Anheben des Großballens 3 ist am Gestell 5 unterhalb des Wickelarmes 7 eine Gabel 9 angeordnet, die an ihren Schenkeln zwei Rollen 10, 11 aufweist, von denen mindestens eine vom Traktor 1 antreibbar ist.

Zum Umwickeln des zylindrischen Großballens 3 fährt der Traktor 1 mit der Gabel 9 so an den auf dem Boden liegenden Großballen 3 heran, daß diese den Großballen 3 untergreift. Anschließend wird die Gabel 9 zum Anheben des Großballens 3 durch den Traktor 1 an einem Halter 12, z. B. hydraulisch, nach oben bewegt, bis der Großballen 3 etwas über dem Boden liegt. Er ruht dabei auf den Rollen 10, 11, wobei die Achsen des Großballens 3 und der Rollen 10, 11 parallel verlaufen.

Nun wird das Ende der Folie 4 am Großballen 3 angelegt und der Großballen 3 durch eine der Rollen 10, 11 oder beide um seine Achse gedreht. Gleichzeitig rotiert der Wickelarm 7 mit der gebremsten Folienrolle 8 um die Achse 6 und umwickelt den Großballen 3.

Der Wickelarm 7 und die Rollen 10, 11 können vom Traktor 1 aus mit Hilfe einer Zapfwelle oder über einen Hydraulikmotor angetrieben werden, welcher vom Traktor gespeist wird.

Die beschriebene Vorrichtung kann wie dargestellt vorne aber auch hinten am Traktor 1 angebaut werden.

Die Folie 4 wird schichtweise versetzt um den Großballen 3 herumgeführt, wobei die Überlappung über die Geschwindigkeit des Wickelarmes 7 und über die Geschwindigkeit der Drehbewegung des Großballens 3 festgelegt ist.

Durch die über die abgebremste Folienrolle 8 gewählte Zugspannung beim Wickeln, durch die Überlappung der Folie 4 und auf Grund der Hafteigenschaften der Stretchfolie wird der Großballen rundum luftdicht abgeschlossen und kann silieren.

Die beschriebene Vorrichtung hat folgende Vorteile:

1. Sie ist billig und einfach.

2. Großballen werden gut eingewickelt, so daß sie nicht verderben.

3. Es ergibt sich ein geringer Folienverbrauch.

4. Ein zuverlässiges Silieren ist auf Grund eines vollständigen Einschlusses des Großballens in die Folie gewährleistet.

5. Die Großballen können im Freien ohne Verluste gelagert werden.

6. Durch das Anheben des Großballens beim Umwickeln wird dieser durch spitze Gegenstände auf dem Boden nicht beschädigt.

7. Der Großballen kann auch leicht transportiert und von einem Ort zum anderen Ort abgelegt werden.

**Ansprüche**

Vorrichtung zum Umwickeln von Großballen (3) mit einer Folie (4), welche mit einem Traktor (1) zur Drehung des Großballens (3) während des Wickelvorgangs verbindbar ist, gekennzeichnet durch ein anbaubares Gestell (2) mit einer Gabel (9) zum Anheben des Großballens (3), die an ihren den Großballen (3) tragenden Schenkeln zwei Rollen (10, 11) aufweist, auf denen der Großballen (3) aufliegt und von denen mindestens eine zum Drehen des Großballens (3) um seine Längsachse vom Traktor (1) antreibbar ist und mit einem um eine vertikale Achse (6) drehbaren Wickelarm (7) über der Gabel (9), der an seinem Ende eine Folienrolle (8) trägt.

Fig.1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,X | EP-A-0 234 763 (OIESTAD) * Spalten 3,4; Spalte 5, Zeilen 1-24; Figuren 1-6 * --- | 1 | A 01 F 15/08 B 65 B 11/04 |
| Y | GB-A-2 066 206 (GUSTIN) * Seite 1, Zeilen 48-130; Seite 2, Zeilen 1-35; Figuren 1,2,3 * --- | 1 | |
| Y | POWER FARMING, Mai 1986, Seite U22, Business Press Int., Ltd, Sutton, GB; " New products" * Figuren 2,3 * & GB-A-2 188 587 (KERR) --- | 1 | |
| D,A | EP-A-0 110 110 (MANULI) * Seite 5, Zeilen 15-28 - Seite 12; Figuren 1,2,3,10,11 * --- | 1 | |
| A | US-A-4 343 132 (LAWLESS) * Spalte 3 - Spalte 9; Figuren 1-11 * ----- | 1 | RECHERCHIERTE SACHGEBIETE (Int. Cl.4) A 01 F A 01 D B 65 B |

Der vorliegende Recherchenbericht wurde für alle Patentansprüche erstellt

| Recherchenort | Abschlußdatum der Recherche | Prüfer |
|---|---|---|
| DEN HAAG | 15-08-1988 | VERMANDER R.H. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..........................................................................
& : Mitglied der gleichen Patentfamilie, übereinstimmendes
    Dokument

EPO FORM 1503 03.82 (P0403)